# EUROPÄISCHE PATENTANMELDUNG

(11) **EP 1 309 209 A2**
(43) Veröffentlichungstag der Anmeldung: **07.05.2003**
(21) Anmeldenummer: 02102024.3
(22) Anmeldetag: 11.07.2002
(51) Int. Cl.: H04Q 3/00

(54) **Verfahren und Vorrichtung zum Übertragen von Nachrichten in einem intelligenten Netz**

(30) Priorität: 14.08.2001 DE 10139866
(71) Anmelder: SIEMENS AKTIENGESELLSCHAFT, 80333 München (DE)
(72) Erfinder: Davutoglu, Can, 1100 Wien (AT); Kriete, Viola, 81825 München (DE)

(57) **Zusammenfassung**

Die Erfindung betrifft ein Verfahren zum Übertragen von Nachrichten in einem intelligenten Netz, in dem einem Teilnehmer eine Vielzahl verschiedener Kommunikationsendgeräte (12, 14) zugeordnet ist. Beim Empfangen einer Nachricht für den Teilnehmer wird abhängig von einem Erreichbarkeitsprofil des Teilnehmers und/oder vom Nachrichtentyp mindestens ein Kommunikationsendgerät (10, 12) zum Empfang der Nachricht ausgewählt und die Nachricht an das mindestens eine ausgewählte Kommunikationsendgerät (10, 12) weitergeleitet.

## Beschreibung

Verfahren und Vorrichtung zum Übertragen von Nachrichten in einem intelligenten Netz

Die Erfindung betrifft ein Verfahren zum Übertragen von Nachrichten in einem intelligenten Netz nach dem Oberbegriff von Anspruch 1 und eine Vorrichtung zum Übertragen von Nachrichten in einem intelligenten Netz nach dem Oberbegriff von Anspruch 11.

Heutzutage besitzen Teilnehmer eines Telekommunikationsnetzes in der Regel mehrere Kommunikationsendgeräte, beispielsweise ein Festnetz- und ein Mobiltelefon, ein Telefax-Gerät und ein E-Mail-Adresse und/oder -Postfach. Als Kommunikationsendgeräte sind hier also nicht nur physikalische Einheiten wie die vorerwähnten Telefone, sondern auch nicht physikalisch als Endgerät vorhandene Einheiten wie eine E-Mail-Adresse und/oder -Postfach zu verstehen. Um dem Teilnehmer eine Nachricht übermitteln zu können, wird eines seiner Kommunikationsendgeräte angewählt und die Nachricht an das angewählte Gerät übermittelt.

Probleme können sich jedoch dadurch ergeben, dass der Teilnehmer nicht immer und überall erreichbar ist. Beispielsweise kann er zeitweise nur über sein Mobiltelefon erreichbar sein. Ein wichtige Telefax-Nachricht kann ihn daher nicht sofort erreichen. Eine "Vereinheitlichung" oder besser Zusammenführung der Kommunikationsmedien und -endgeräte wäre daher für eine optimale, insbesondere effiziente Kommunikation wünschenswert.

Dieser Ansatz ist bereits als Unified Messaging bekannt. Hierbei werden verschiedene Nachrichtenformen wie Sprach-, Text- oder Bildnachrichten in ein System integriert und einem Teilnehmer zum Abruf zur Verfügung gestellt. In einem derartigen System steht ihm in der Regel eine Art universelle Mailbox zur Verfügung, in die alle an ihn adressierten Nachrichten gespeichert werden, unabhängig vom Nachrichtenformat. Er kann diese Nachrichten mittels eines geeigneten Software-Programms über einen Computer abrufen. Auch in diesem Fall ist jedoch nicht gewährleistet, dass der Teilnehmer sofort eine Nachricht erhält. Um auf seine Mailbox zugreifen zu können, benötigt er in der Regel einen Computer mit Internetzugang, der ihm aber nicht überall zur Verfügung steht.

Zwar gibt es mittlerweile die Möglichkeit, dass dem Teilnehmer der Eingang einer neuen Nachricht in seiner Mailbox auf seinem Mobiltelefon mittels einer SMS (Kurzmitteilungsdienst)-Nachricht mitgeteilt wird. Auch hier benötigt jedoch der Teilnehmer einen Zugang zu seiner Mailbox, um die neu eingegangene Nachricht abfragen zu können.

Ein weiteres Problem besteht darin, dass zum Versenden von Nachrichten an einen Teilnehmer mit mehreren Kommunikationsendgeräten eine Vielzahl von Anschlussnummern (worunter hier auch eine E-Mail-Adresse verstanden wird) gemerkt oder gespeichert werden müssen. In Adress- oder Kontaktdatenbanken erfordert dies einerseits viel Speicherplatz. Andererseits kann man sich viele Rufnummern und sonstige Kontaktadressen einfach schwer merken. Besitzt der Teilnehmer beispielsweise Mobil- und Festnetztelefon, E-Mail-Adresse und Telefax-Gerät mit eigenem Anschluss, sind ihm insgesamt 3 Rufnummern und eine E-Mail-Adresse zugeordnet.

Aufgabe der vorliegenden Erfindung ist es daher, ein Verfahren und eine Vorrichtung zum Übertragen von Nachrichten in einem intelligenten Netz vorzuschlagen, mit denen die eingangs erwähnten Probleme vermieden werden können.

Diese Aufgabe wird durch ein Verfahren mit den Merkmalen nach Anspruch 1 und durch eine Vorrichtung mit den Merkmalen nach Anspruch 11 gelöst. Bevorzugte Ausgestaltungen der Erfindung ergeben sich aus den abhängigen Ansprüchen.

Kern der Erfindung ist es, in einem intelligenten Netz die Auswahl des Kommunikationsendgeräts automatisch vorzunehmen, so dass ein Sender einer Nachricht an einen Teilnehmer mit einer Vielzahl von Kommunikationsendgeräten davon entlastet wird, das zum Empfang der Nachricht geeignete Kommunikationsendgerät selbst auszuwählen. Er muss sich zudem nicht mehr so viele Rufnummern der verschiedenen, den Kommunikationsendgeräten zugeordneten Anschlüsse merken. In der Regel reicht es aus, dass der Sender eine dem Teilnehmer zugeordnete Rufnummer kennt und diese für jedwede Nachrichtenform - Text, Sprache oder Bild - anwählt. Eine Auswahl des für die Nachricht geeigneten Kommunikationsendgeräts des Empfängers wird dann automatisch im intelligenten Netz vorgenommen.

Erfindungsgemäß wird dies durch ein Verfahren zum Übertragen von Nachrichten in einem intelligenten Netz erreicht, wobei in dem intelligenten Netz einem Teilnehmer eine Vielzahl verschiedener Kommunikationsendgeräte zugeordnet sind. Beim Empfangen einer Nachricht für den Teilnehmer in einem Netzknoten des intelligenten Netzes wird abhängig von einem Erreichbarkeitsprofil des Teilnehmers und/oder vom Nachrichtentyp mindestens ein Kommunikationsendgerät zum Empfang der Nachricht ausgewählt und die Nachricht an das mindestens eine ausgewählte Kommunikationsendgerät weitergeleitet. Weiterleten ist hier in dem Sinne von Routen zu verstehen. D.h. also, dass eine "Nachricht weiterleiten" als das Übertragen der Nachricht vom empfangenden Netzknoten an ein Endgerät des Teilnehmers bedeutet. Mittels des Erreichbarkeitsprofils kann beispielsweise das Kommunikationsendgerät zum Empfang ausgewählt werden, auf das der Teilnehmers aktuell Zugriff hat. Das Erreichbarkeitsprofil kann beispielsweise ein Datensatz sein, in dem die Erreichbarkeit eines Teilnehmers zu verschiedenen Tageszeiten festgelegt ist. Beispielsweise kann dort angegeben sein, dass der Teilnehmer am Vormittag über sein Mobil- und am Nachmittag über sein Festnetztelefon erreichbar ist. Ferner kann das Kommunikationsendgerät, an das die Nachricht gesendet wird, anhand des Nachrichtentyps ausgewählt werden. Unter Nachrichtentyp wird hier insbesondere eine Text-, Bild- oder Sprachnachricht verstanden. Der Nachrichtentyp entscheidet sich insbesondere am überwiegenden Inhalt der Nachricht und/oder am zum Empfang vorgesehenen Endgerät. Daher ist eine überwiegend Text enthaltende Telefax-Nachricht eine Bildnachricht. Beispielsweise kann für eine Telefax- und/oder Bild-Nachricht das Telefax-Gerät des Teilnehmers, für eine Sprach-Nachricht sein Mobil- oder Festnetztelefon und für eine Text-Nachricht sein Mobiltelefon ausgewählt werden. Eine Nachricht kann auch an mehrere ausgewählte Kommunikationsendgeräte weitergeleitet werden, entweder gleichzeitig im Sinne von Broadcast oder zeitlich aufeinanderfolgend bzw. nacheinander, beispielsweise bis ein empfangsbereites Kommunikationsendgerät erreicht wurde. Das Verfahren erleichtert einem Nutzer nicht nur das Senden einer oder mehrerer Nachrichten, sondern spart auch Zeit, da eine Nachricht in der Regel nur einmal versendet werden muss. Um das "Zustellen" kümmert sich das intelligente Netz sozusagen ohne menschlichen Eingriff.

Die Nachricht kann auch vor dem Weiterleiten an ein Kommunikationsendgerät in den zum Verarbeiten durch das Kommunikationsendgerät geeigneten Nachrichtentyp umgesetzt werden. Beispielsweise kann eine Sprach- in eine Text- oder E-Mail-Nachricht und umgekehrt und/oder ein Telefax in eine Textoder E-Mail-Nachricht und umgekehrt umgesetzt werden. Es kann auch beispielsweise eine wichtige Text-Nachricht einem Teilnehmer über sein Mobiltelefon vorgelesen werden. Vorzugsweise wird eine entsprechende Einstellung über das Erreichbarkeitsprofil vorgenommen. Das Verfahren gewinnt besonders an Bedeutung, wenn es durch die Vergabe von Prioritäten vereinfacht wird. Ein Teilnehmer kann hierzu sein Erreichbarkeitsprofil derart konfigurieren, dass nur Sprach- und Textnachrichten mit einer vorgegebenen Priorität an sein Mobiltelefon weitergeleitet werden. In diesem Fall können die Textnachrichten dem Empfänger mittels einer Text-to-Speech-Einrichtung vorgelesen werden.

Vorzugsweise verarbeitet mindestens eine Flexible Dienstlogik Nachrichten in einem Dienstkontrollknoten des intelligenten Netzes. Insbesondere wählt die mindestens eine Flexible Dienstlogik Kommunikationsendgeräte zum Empfangen der Nachrichten aus, setzt Nachrichten gegebenenfalls um und leitet Nachrichten an ausgewählte Kommunikationsendgeräte weiter. Unter Umsetzen der Nachrichten wird hier insbesondere eine Umsetzung in ein bestimmtes, zum Versenden bzw. Übertragen der Nachrichten geeignetes Protokoll verstanden.

Der Dienstkontrollknoten startet in einer bevorzugten Ausführungsform des Verfahrens beim Empfangen einer Nachricht eine Flexible Dienstlogik, welche die Nachricht analysiert und abhängig von dem Analyseergebnis und vorgegebenen Parametern mindestens ein Kommunikationsendgerät zum Empfangen der Nachricht auswählt. Die vorgegebenen Parameter können beispielsweise dem Erreichbarkeitsprofil entnommen sein.

Vorzugsweise baut der Dienstkontrollknoten nach Auswahl eines Kommunikationsendgeräts eine Verbindung zu dem ausgewählten Kommunikationsendgerät auf und startet ein generisches Protokoll zum Übertragen der Nachricht an das Kommunikationsendgerät. Hierbei kann die Nachricht von einem Dienstdatenknoten-Gateway übertragen werden.

Zum Überwachen der Nachrichten-Übertragung erzeugt das Kommunikationsendgerät, das die Nachricht empfängt, vorzugsweise eine Bestätigungsantwort zur Bestätigung über den Empfang und sendet diese an das Dienstdatenknoten-Gateway. Nachdem die Bestätigungsantwort vom Dienstdatenknoten-Gateway empfangen wurde, kann dann das generische Protokoll beendet werden. Anschließend kann diese der Flexiblen Dienstlogik übergeben und von mindestens einem Dienstunabhängigen Programmmodul ausgewertet werden.

Die Erfindung betrifft ferner eine Vorrichtung zum Übertragen von Nachrichten in einem intelligenten Netz, bei der ein Dienstkontrollknoten derart ausgebildet ist, dass er beim Empfangen einer Nachricht für einen Teilnehmer abhängig von einem Erreichbarkeitsprofil des Teilnehmers und/oder vom Nachrichtentyp mindestens ein zum Empfang der Nachricht geeignetes Kommunikationsendgerät auswählt und die Nachricht an das mindestens eine ausgewählte Kommunikationsendgerät weiterleitet.

Vorzugsweise ist ein Kommunikationsgateway mit dem Dienstkontrollknoten verbunden. Über das Kommunikationsgateway werden Nachrichten geleitet.

Kommunikationsgateway und Dienstkontrollknoten kommunizieren in einer besonders bevorzugten Ausführungsform der Vorrichtung über eine Nachrichtenschnittstelle insbesondere mittels TCP/IP. In einer weiter bevorzugten Ausführung sind sie miteinander integriert.

Ferner kann das Kommunikationsgateway mit mindestens einem Dienstdatenknoten-Gateway verbunden sein, über den Nachrichten übertragen werden.

Vorzugsweise weist der Dienstkontrollknoten mindestens eine Flexible Dienstlogik zum Verarbeiten von Nachrichten auf.

In einer besonders bevorzugten Ausführungsform umfasst der Dienstkontrollknoten mindestens ein Protokoll-Modul für generische Nachrichten.

Schließlich kann das Kommunikationsgateway einen generischen Protokollstapel-Speicher für die Kommunikation mit dem Dienstkontrollknoten und mindestens einen nachrichtenspezifischen Protokollstapel-Speicher für die Kommunikation mit Kommunikationsendgeräten aufweisen.

Im folgenden wird die Erfindung anhand eines Ausführungsbeispiels in Verbindung mit den Zeichnungen erläutert. Diese zeigen in
Fig. 1 die Ausführungsbeispiel der Einbindung eines Kommunikationsgateways in ein intelligentes Netz und
Fig. 2 ein Ausführungsbeispiel eines erfindungsgemäßen SCPs und eines Kommunikationsgateways.

Die im folgenden verwendeten Abkürzungen sind in der nachfolgenden Liste mit Bezugszeichen und Abkürzungen erläutert.

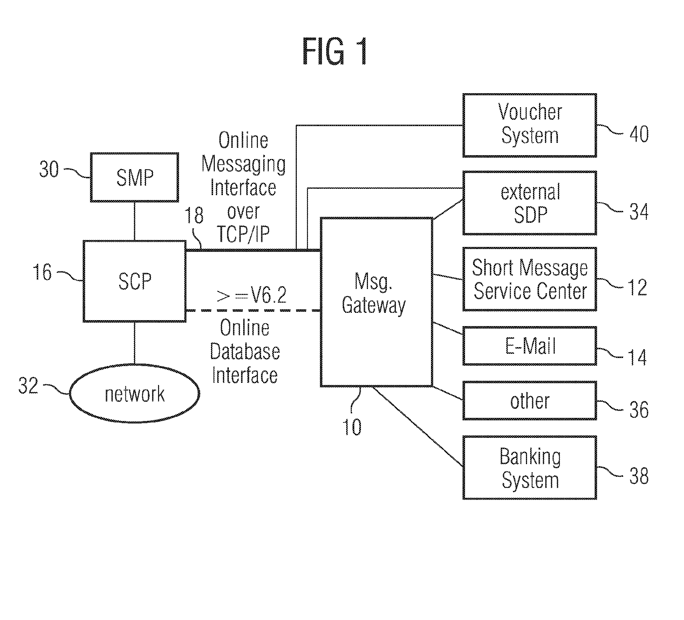

In Fig. 1 ist ein Kommunikationsgateway 10 (Message Gateway) über einen TCP/IP-Verbindung 18 mit einem SCP 16 eines intelligenten Netzes gekoppelt. Der SCP 16 ist an ein Telekommunikationsnetz 32, beispielsweise PSTN oder ISDN, angeschlossen. Ferner ist ein SMP 30 mit dem SCP 16 verbunden.

An den SCP 16 sind über die TCP/IP-Verbindung 18 neben dem Kommunikationsgateway 10 ein Gutschein-System 40 (Voucher System) und ein externer SDP 34 angeschlossen.

Das Kommunikationsgateway 10 kann mit einem Kurzmitteilungsdienstzentrale 12 zum Versenden von SMS-Nachrichten, einem E-Mail-Client 14 für E-Mails oder einem anderen Kommunikationsendgerät 36 wie beispielsweise einem Telefax-Gerät kommunizieren.

Über das Kommunikationsgateway 10 läuft die gesamte Kommunikation mit einem Teilnehmer, der mehrere Kommunikationsendgeräte wie ein Festnetz- und ein Mobiltelefon, ein Telefax-Gerät und eine E-Mail-Adresse und/oder -Postfach besitzt. Ebenso kann aber auch ein Zugriff auf ein Banksystem 38 über das Kommunikationsgateway 10 erfolgen.

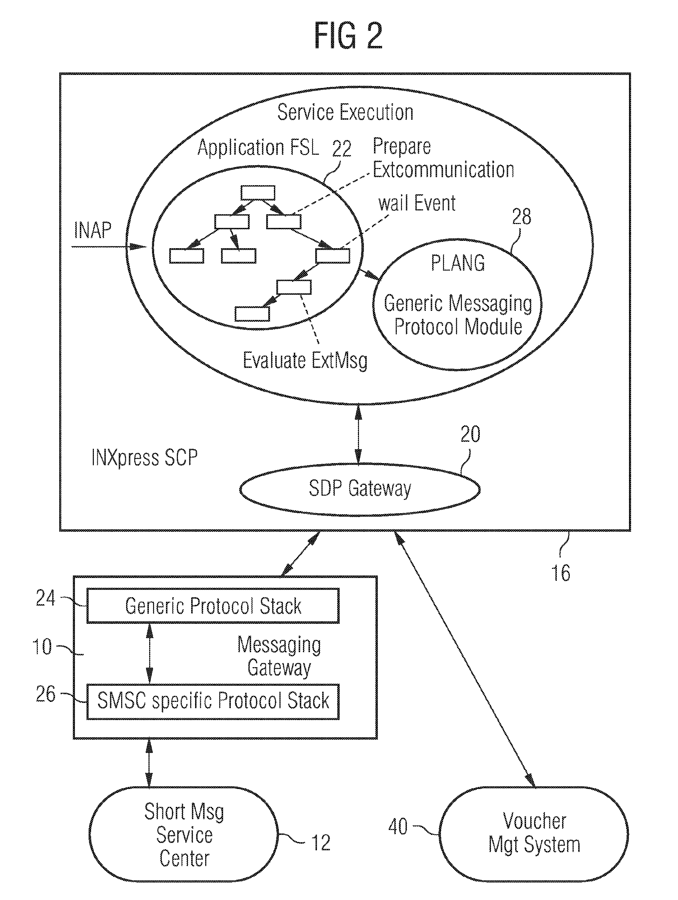

In Fig. 2 ist der Aufbau des SCPs 16 und des Kommunikationsgateways 10 dargestellt.

Der SCP 16 weist Funktionen zur Dienstausführung auf, unter anderem eine FSL 22 zur Verarbeitung eingehender Nachrichten für Teilnehmer. Die FSL 22 analysiert eingehende Nachrichten hinsichtlich ihres Typs, also ob Text-, Bild- oder Sprach-Nachricht. Hat die FSL 22 den Nachrichtentyp einer eingehenden Nachricht festgestellt, wählt sie mindestens ein entsprechendes Kommunikationsendgerät 12 zum Empfangen der Nachricht aus. Hierbei kann sie noch Parameter aus einem Erreichbarkeitsprofil eines Teilnehmers berücksichtigen.

Danach wird die Nachricht mittels eines Protokoll-Moduls für generische Nachrichten 28 in ein zur Übertragung geeignetes Protokoll umgewandelt. Die so umgewandelte Nachricht wird über ein SDP-Gateway 20 an das Kommunikationsgateway 10 übermittelt.

Das Kommunikationsgateway 10 speichert die empfangene Nachricht in einem generischen Protokollstapel-Speicher 24 ab. Ferner wandelt das Kommunikationsgateway 10 die Nachricht in ein Protokoll für das Kommunikationsendgerät 12 um, im vorliegenden Fall in das für eine SMS-Nachricht verwendete Protokoll. Anschließend wird die derart umgewandelte Nachricht an das Kommunikationsendgerät, das im vorliegenden Fall durch das Kurzmitteilungsdienstzentrale 12 symbolisiert ist, gesendet.

Die durch die Erfindung ermöglichte Funktionalität kann beispielsweise durch SIBs im SCP 16 implementiert sein.

## Patentansprüche

1. Verfahren zum Übertragen von Nachrichten in einem intelligenten Netz, in dem einem Teilnehmer eine Vielzahl verschiedener Kommunikationsendgeräte (12, 14) zugeordnet ist,
**dadurch gekennzeichnet,daß**
beim Empfangen einer Nachricht für den Teilnehmer in einem Netzknoten des intelligenten Netzes abhängig von einem Erreichbarkeitsprofil des Teilnehmers und/oder vom Nachrichtentyp mindestens ein Kommunikationsendgerät (10, 12) zum Empfang der Nachricht ausgewählt und die Nachricht an das mindestens eine ausgewählte Kommunikationsendgerät (10, 12) weitergeleitet wird.

2. Verfahren nach Anspruch 1,
**dadurch gekennzeichnet,daß**
die Nachricht vor dem Weiterleiten an ein Kommunikationsendgerät in den zum Verarbeiten durch das Kommunikationsendgerät geeigneten Nachrichtentyp umgesetzt wird.

3. Verfahren nach Anspruch 2,
**dadurch gekennzeichnet,daß**
eine Sprach- in eine Text- oder E-Mail-Nachricht und umgekehrt und/oder ein Telefax in eine Text- oder E-Mail-Nachricht und umgekehrt umgesetzt wird.

4. Verfahren nach einem der vorhergehenden Ansprüche,
**dadurch gekennzeichnet,daß**
mindestens eine Flexible Dienstlogik (22) Nachrichten in einem Dienstkontrollknoten (16) des intelligenten Netzes verarbeitet, insbesondere Kommunikationsendgeräte (10, 12) zum Empfangen der Nachrichten auswählt, Nachrichten gegebenenfalls umsetzt und an ausgewählte Kommunikationsendgeräte (10) weiterleitet.

5. Verfahren nach Anspruch 4,
**dadurch gekennzeichnet,daß**
der Dienstkontrollknoten (16) beim Empfangen einer Nachricht eine Flexible Dienstlogik (22) startet, welche die Nachricht analysiert und abhängig von dem Analyseergebnis und vorgegebenen Parametern mindestens ein Kommunikationsendgerät (12) zum Empfangen der Nachricht auswählt.

6. Verfahren nach Anspruch 5,
**dadurch gekennzeichnet,daß**
der Dienstkontrollknoten (16) nach Auswahl eines Kommunikationsendgeräts (12) eine Verbindung zu dem ausgewählten Kommunikationsendgerät (12) aufbaut und ein generisches Protokoll zum Übertragen der Nachricht an das Kommunikationsendgerät startet.

7. Verfahren nach Anspruch 6,
**dadurch gekennzeichnet,daß**
ein Dienstdatenknoten-Gateway die Nachricht überträgt.

8. Verfahren nach Anspruch 7,
**dadurch gekennzeichnet,daß**
das Kommunikationsendgerät die Nachricht empfängt, eine Bestätigungsantwort erzeugt und an das Dienstdatenknoten-Gateway sendet.

9. Verfahren nach Anspruch 8,
**dadurch gekennzeichnet,daß**
das generische Protokoll beendet wird, nachdem die Bestätigungsantwort vom Dienstdatenknoten-Gateway empfangen wurde.

10. Verfahren nach Anspruch 9,
**dadurch gekennzeichnet,daß**
die Bestätigungsantwort der Flexiblen Dienstlogik übergeben und von mindestens einem dienstunabhängigem Programmmodul ausgewertet wird.

11. Vorrichtung zum Übertragen von Nachrichten in einem intelligenten Netz, die für ein Verfahren nach einem oder mehreren der vorhergehenden Ansprüche ausgebildet ist, wobei ein Dienstkontrollknoten (16) derart ausgebildet ist, dass er beim Empfangen einer Nachricht für einen Teilnehmer abhängig von einem Erreichbarkeitsprofil des Teilnehmers und/oder vom Nachrichtentyp mindestens ein Kommunikationsendgerät (12, 14) zum Empfang der Nachricht auswählt und die Nachricht an das mindestens eine ausgewählte Kommunikationsendgerät (12, 14) weiterleitet.

12. Vorrichtung nach Anspruch 11,
**dadurch gekennzeichnet,daß**
ein Kommunikationsgateway (10) vorgesehen ist, das mit einem Dienstkontrollknoten (16) verbunden ist und über das Nachrichten geleitet wird.

13. Vorrichtung nach Anspruch 12,
**dadurch gekennzeichnet,daß**
Kommunikationsgateway (10) und Dienstkontrollknoten (16) über eine Nachrichtenschnittstelle (18) insbesondere mittels TCP/IP kommunizieren.

14. Vorrichtung nach Anspruch 12 oder 13,
**dadurch gekennzeichnet,daß**
das Kommunikationsgateway (10) mit mindestens einem Dienstdatenknoten-Gateway (20) verbunden ist, über den Nachrichten übertragen werden.

15. Vorrichtung nach einem der Ansprüche 12 bis 14,
**dadurch gekennzeichnet,daß**
der Dienstkontrollknoten (16) mindestens eine Flexible Dienstlogik (22) zum Verarbeiten von Nachrichten aufweist.

16. Vorrichtung nach einem der Ansprüche 12 bis 15,
**dadurch gekennzeichnet,daß**
der Dienstkontrollknoten (10) mindestens ein Protokoll-Modul (28) für generische Nachrichten umfasst.

17. Vorrichtung nach einem der Ansprüche 12 bis 16,
**dadurch gekennzeichnet,daß**
das Kommunikationsgateway (10) einen generischen Protokollstapel-Speicher (24) für die Kommunikation mit dem Dienstkontrollknoten (16) und mindestens einen nachrichtenspezifischen Protokollstapel-Speicher (26) für die Kommunikation mit Kommunikationsendgeräten (12) aufweist.
